Europäisches Patentamt

(19) European Patent Office

Office européen des brevets

(11) Publication number: **0 097 253**
**B1**

(12) # EUROPEAN PATENT SPECIFICATION

(45) Date of publication of patent specification: **24.09.86**

(51) Int. Cl.⁴: **C 08 L 51/00**

(21) Application number: **83105034.9**

(22) Date of filing: **20.05.83**

(54) **Blend of impact modifier, vinyl chloride polymer, and acrylic resin.**

(30) Priority: **27.05.82 US 382538**

(43) Date of publication of application:
**04.01.84 Bulletin 84/01**

(45) Publication of the grant of the patent:
**24.09.86 Bulletin 86/39**

(84) Designated Contracting States:
**DE FR GB IT NL**

(56) References cited:
**EP-A-0 008 859**
**EP-A-0 045 875**
**US-A-4 168 285**

(73) Proprietor: **GENERAL ELECTRIC COMPANY**
**1 River Road**
**Schenectady New York 12305 (US)**

(72) Inventor: **Aliberto, Anthony Carmine**
**22 Sterling Street**
**Beacon, NY 12508 (US)**
Inventor: **Silberberg, Joseph**
**1084 East 28th Street**
**Brooklyn, NY 11210 (US)**

(74) Representative: **Schüler, Horst, Dr. et al**
**Kaiserstrasse 41**
**D-6000 Frankfurt/Main 1 (DE)**

## Description

### Background of the invention
### Field of the invention

The present invention relates to a three component polymer blend having good hardness and flame retardancy for use in making molded parts.

### Description of the prior art

Impact resistant, weatherable polymer compositions comprising acrylate, styrene, and acrylonitrile components are known. U.S. Patent No. 3,944,631 to A. J. Yu et al., which discloses one of the components used in the blends of the present invention, describes an interpolymer comprising: (a) crosslinked (meth)acrylate; (b) crosslinked styrene-acrylonitrile; and (c) uncrosslinked styrene-acrylonitrile polymeric components. This material is said to have superior weather resistance as compared to ABS polymers and is only taught in U.S. Patent No. 3,944,631 for use by itself without blending with other polymeric materials.

Blends of the polymer composition described in U.S. Patent No. 3,944,631 with certain specific thermoplastic polymers are also described in the literature. For example, U.S. Patent No. 4,168,285 to M. J. Turczyk describes blends of vinyl chloride polymer and the polymer composition shown in U.S. Patent No. 3,944,631. Also, blends of acrylic polymers with this composition are described in EP—A—0045875.

Three component blends which comprise the composition of U.S. Patent No. 3,944,631 are described in U.S. Patent No. 4,160,793 to P. Kraft et al. in which the other two components are vinyl chloride polymer and chlorinated vinyl chloride polymer.

### Summary of the present invention

The invention relates to a fire retarding blend having good impact resistance and a high heat deflection temperature comprising:

(1) 45 to 65 percent by weight of an interpolymer prepared by the following three step, sequential polymerization process:

1. emulsion polymerizing a monomer charge "(meth)acrylate" of at least one $C_2$—$C_{10}$ alkyl acrylate $C_8$—$C_{22}$ alkyl methacrylate, or compatible mixtures thereof, in an aqueous polymerization medium in the presence of an effective amount of a suitable di- or polyethylenically unsaturated cross-linking agent for such a monomer,

2. emulsion polymerizing a monomer charge of styrene and acrylonitrile in an aqueous polymerization medium, also in the presence of an effective amount of a suitable di- or polyethylenically unsaturated crosslinking agent for such a monomer, said polymerization being carried out in the presence of the product from step 1, and

3. either emulsion or suspension polymerizing a monomer charge of styrene and acrylonitrile, in the absence of a crosslinking agent, in the presence of the product resulting from step 2, and comprising

    a) 5 to 50 percent by weight of the crosslinked (meth)acrylate,

    b) 5 to 35 percent by weight of a crosslinked styrene-acrylonitrile and

    c) 15 to 90 percent by weight of an uncrosslinked styrene-acrylonitrile component,

(2) 15 to 30 percent by weigth of an acrylic resin and

(3) 20 to 35 percent by weight of a vinyl chloride polymer.

The polymer blends of the invention comprise the interpolymer shown in U.S. Patent No. 3,944,631 with lesser amounts of an acrylic polymer and a vinyl chloride polymer. Such blends have good surface hardness and flame retardancy. They have utility in making molded parts (for example, stadium seats, patio furniture, bus seats and exterior wall pieces, etc.).

### Description of preferred embodiments

The terminology "interpolymer comprising crosslinked (meth)acrylate, crosslinked styrene-acrylonitrile and uncrosslinked styrene acrylo-nitrile components" as used herein, is meant to encompass the type of interpolymer compositions described and claimed in U.S. Patent No. 3,944,631 to A. J. Yu et al. These interpolymer compositions are formed by the above mentioned three step, sequential polymerization process.

In step (2) the crosslinked (meth)acrylate and crosslinked styrene-acrylonitrile components form an interpolymer wherein the respective phases surround and penetrate one another.

If desired, steps 1 and 2 can be reversed in the above described procedure.

This interpolymer product, which is used as the predominant ingredient in the blend of the present invention, contains little graft polymerization between the styrene acrylonitrile copolymer segments and the crosslinked (meth)acrylate polymeric component, and it has an optimum processing range of from 199°C to 232.2°C. The particular optimum temperature will depend on the precise amount of each of the three differing polymer phases which are present in the composition. Further details regarding this type of polymer composition can be found in U.S. Patent No. 3,944,631 to A. J. Yu et al., which is incorporated herein by reference.

The terminology "vinyl chloride polymer" as used herein, is meant to encompass polyvinyl chloride homopolymers, as well as the copolymers of vinyl chloride with comonomers polymerizable therewith, with the former monomer predominating the latter in amount. Such comonomers include vinyl esters of carboxylic acids, such as vinyl acetate, the $C_1$—$C_{20}$ alkyl esters of acrylic and methacrylic acid, the aryl, halo- and nitro-substituted benzyl esters of acrylic and methacrylic acid, the ethylenically unsaturated mono- and dicarboxylic acids, and the like.

The term "acrylic resin", as used herein, is intended to encompass those acrylic resins which are made by the polymerization of acrylic ester monomers. Details regarding the structure of these polymeric materials as well as the processes for forming them are available from a number of sources including Modern Plastics Encyclopedia (1977—1978 Edition), pp. 9—10; Handbook of Plastics and Elastomers, C. A. Harper ed., McGraw-Hill, Inc. 1975, pp. 1—71 to 1—75; and Polymers and Resins by B. Golding, Van Nostrand Co., 1959, pp. 448—462. Representative polymers which are included in this class of acrylic resins or plastics include: polymethyl methacrylate, polyethyl acrylate and polybutyl acrylate. Copolymers of these acrylic esters with minor amounts of one or more polymerizable monomers are also intended to be encompassed, e.g., the copolymer of methyl methacrylate with styrene and acrylonitrile. Commercially available acrylic resins include those sold under the following trademarks: Lucite (E.I. duPont de Nemours and Co.); and Plexiglas (Rohm and Haas Co.).

The respective weight amounts of the three above-described components of the blends of this invention can be varied within the following weight percentages (based on the weight of the entire blend): interpolymers—from 45% to 65%; vinyl chloride polymer—from 20% to 35%; and acrylic resin—from 15% to 30%. Preferred blends generally will comprise from 45% to 50%, by weight, of the interpolymer, from 30% to 35%, by weight of the vinyl chloride polymer, and from 20% to 25%, by weight of the acrylic resin.

The blends of the present invention have better flame retardancy and impact resistance than blends of the interpolymer and acrylic resin and have better surface gloss and heat distortion temperature than blends of the interpolymer and vinyl chloride polymer.

Preferred blends of the present invention contain up to 25 parts by weight acrylic resin and over 25 parts by weight vinyl chloride polymer per 100 parts by weight of the blend.

In addition to the three aforementioned components, the compositions of the present invention can contain other additives, which enhance specific desired properties of the compositions. Representative additives include heat and light stabilizers, anti-oxidants, fillers (e.g., calcium carbonate, clay, etc.), lubricants, additional impact modifiers, additional flame retardant and/or smoke suppressant additives (e.g., antimony oxide, aluminum trihydrate, etc.), and pigments (e.g., titanium dioxide, carbon black, etc.).

The blends of this invention can be formulated from the components thereof by any of the commonly used compounding techniques including single or twin screw extrusion, two-roll or Banbury milling, and the like. Shapes or articles can be fabricated from the compounded blends by extrusion, calendering, injection molding, or any other fabrication method which is suitable for thermoplastic resins. Mixtures of the components of the blends may also be fabricated directly into shapes or articles by any method which will suitably compound them in the course of fabrication. The present invention will be further understood by examination of the following Examples which illustrate certain embodiments of the present invention.

Example 1

This example illustrates the physical property profile for certain compositions including a composition in accordance with the present invention.

An interpolymer modifier composition was formed by blending, at 85°C. for 10 min. in a Welex® high intensity blender, 10,000 gm. of interpolymer (32% crosslinked polybutyl acrylate, 10% crosslinked styrene-acrylonitrile, and 58% uncrosslinked styrene-acrylonitrile as described in U.S. Patent No. 3,944,631 to A. J. Yu et al.), 10 gm. of tin carboxylate stabilizer (T-340 brand from Carstab Chemicals), and 50 gm. of polyethylene lubricant (AC-392 brand from Allied Chemical Company). This composition will be referred to as "interpolymer powder" in this Example.

Various compositions were extruded as indicated in the following Table for later testing. Composition D is in accordance with the present invention and comprises 50 wt. % interpolymer, 25 wt. % polymethyl methacrylate, 25 wt. % polyvinyl chloride.

# 0 097 253

| Composition | | Amount | Extrusion temp. (°C.) |
|---|---|---|---|
| A: | Interpolymer powder | 9.98 kg. | 193—204 |
| B: | Interpolymer powder: PMMA pellets (50:50) | 6.81 kg. | 204—215 |
| C: | Interpolymer powder: PVC powder (50:50) | 10.43 kg | 176—193 |
| D: | Interpolymer powder: PVC pellets (50:50) and Interpolymer powder: PMMA pellets (50:50) | 23.13 kg. | 193—204 |

PMMA=polymethyl methacrylate (Lucite® 147K brand).
PVC = polyvinyl chloride (Geon® 103EPF-76 brand), a suspension resin designed for exterior profiles.

The PVC powder used in C comprised 100 parts by weight PVC, 2.0 parts tin mercaptide stabilizer (Thermolite® 137 brand), 0.5 part paraffin wax (Hoechst® XL165 brand), 0.3 part polyethylene lubricant (Allied® A629a brand), and 1.0 calcium stearate.

The extruded samples were dried at about 80°C. for over 2 hours before injection molding. The Table given below sets forth the physical properties noted. The values given below are the average of tests on five specimens with the value in parenthesis being the standard deviation of the data:

| Sample | Tensile strength (MPa) | | Elongation (%) | | Tensile mod. of elast. (GPa) |
|---|---|---|---|---|---|
| | Yield | Break | Yield | Break | |
| A | 36.04 (0.15) | 25.50 (0.74) | 4 (0.4) | 43.6 (6.3) | 1.37 (0.11) |
| B | 57.77 (0.39) | 39.80 (1.23) | 4.7 (0.6) | 42.3 (11.8) | 2.29 (0.46) |
| C | 44.14 (0.18) | 32.94 (0.94) | 4.4 (0.5) | 71.5** (26.4) | 1.82 (0.35) |
| D* | 51.59 (0.63) | 36.31 (0.50) | 5 (0.7) | 54.3 (8.2) | 1.67 (0.21) |

\* present invention.
\*\* two specimens did break at values over 100% which was beyond the capability of the instrument. The value given is the average value of the remaining three specimens.

The following additional data were also generated. The numbers after "±" give the 95% confidence limits for the data:

| Sample | Flexural modulus of elasticity (GPa) |
|---|---|
| A | 1.69±0.08 |
| B | 2.58±0.20 |
| C | 2.26±0.12 |
| D* | 2.36±0.04 |

\* present invention

One specimen each of Samples A—D was tested for its heat distortion temperature both before and after being annealed at 90°C. for 2 hours. The following values were obtained:

4

| Sample | Unannealed (°C) | Annealed (°C) |
|---|---|---|
| A | 74 | 94 |
| B | 74 | 92 |
| C | 68 | 80 |
| D* | 72 | 89 |

* present invention

The above data indicate that for sample D the heat deflection temperature is synergistic, being more than the average of the values for samples B and C.

The following Izod impact data was recorded on ten specimens. The abbreviation "G" under the heading "Sample" represents that the testing was done on the side of the specimen adjacent the gate of the injection molding specimen, whereas "V" represents the testing was done on the side adjacent the vent of the specimen. The pendulum capacity was 107 J/m, except for sample C where it was 267 J/m. The 95% confidence limits are given after the "±" sign.

| Sample | Izod impact (J/m) | Type of break Brittle | Ductile |
|---|---|---|---|
| A—G | 481±32 | 0 | 10 |
| A—V | 166±21 | 0 | 10 |
| B—G | 32± 5 | 10 | 0 |
| B—V | 27± 5 | 10 | 0 |
| C—G | 870±27 | 0 | 10 |
| C—V | 785±32 | 0 | 10 |
| D*—G | 75± 5 | 10 | 0 |
| D*—V | 85± 5 | 10 | 0 |

* present invention

Example 2

This Example illustrates the admixture, as appropriate, of suitable amounts of: (1) interpolymer/PVC blends; (2) interpolymer/polymethyl-methacrylate blends; (3) interpolymer; and (4) polymethyl methacrylate to yield blends of varying amount of interpolymer, polyvinyl chloride, and polymethyl methacrylate in accordance with the present invention. The compositions and procedures employed in Example 1 were used.

The Table given below sets forth the average Izod impact values for ten specimens of each sample.

| Sample | Interpolymer | PVC | PMMA | Izod impact* (J/m) |
|--------|-------------|-----|------|----------------------|
| | (parts by weight) | | | |
| A | 50 | 25 | 25 | 80 B |
| B | 50 | 20 | 30 | 91 B |
| C | 50 | 30 | 20 | 240 D |
| D | 55 | 25 | 20 | 176 B |
| E | 55 | 20 | 25 | 139 B |
| F | 60 | 20 | 20 | 166 B |
| G | 45 | 25 | 30 | 85 B |
| H | 45 | 30 | 25 | 192 B |
| I | 45 | 35 | 20 | 336 D |

\* determined on 3.18 mm. thick plaques. "B" indicates break; "D", ductile.

The data illustrate that for the best Izod values the composition should contain less than about 25 parts by weight PMMA (acrylic resin), and the composition should contain over 25 parts by weight PVC.

**Claims**

1. A fire retarding blend having good impact resistance and a high heat deflection temperature comprising:
(1) 45 to 65 percent by weight of an interpolymer prepared by the following three step sequential polymerization process:
   1. emulsion polymerizing a monomer charge "(meth)acrylate" of at least one $C_2$—$C_{10}$ alkyl acrylate, $C_8$—$C_{22}$ alkyl methacrylate, or compatible mixtures thereof, in an aqueous polymerization medium in the presence of an effective amount of a suitable di- or polyethylenically unsaturated crosslinking agent for such a monomer,
   2. emulsion polymerizing a monomer charge of styrene and acrylonitrile in an aqueous polymerization medium, also in the presence of an effective amount of a suitable di- or polyethylenically unsaturated crosslinking agent for such a monomer, said polymerization being carried out in the presence of the product from step 1, and
   3. either emulsion or suspension polymerizng a monomer charge of styrene and acrylonitrile, in the absence of a crosslinking agent, in the presence of the product resulting from step 2, and comprising
      a) 5 to 50 percent by weight of the crosslinked (meth)acrylate,
      b) 5 to 35 percent by weight of a crosslinked styrene-acrylonitrile and
      c) 15 to 90 percent by weight of an uncrosslinked styrene-acrylonitrile component,
(2) 15 to 30 percent by weight of an acrylic resin and
(3) 20 to 35 percent by weight of a vinyl chloride polymer.
2. A blend as claimed in claim 1 which comprises from 45 percent to 50 percent, by weight, of the interpolymer, from 30 percent to 35 percent, by weight, of the vinyl chloride polymer, and from 20 percent to 25 percent, by weight, of the acrylic resin.
3. A blend as claimed in either claim 1 or 2 in which the acrylic resin is polymethyl methacrylate.
4. A blend as claimed in either claim 1 or 3 which contains up to 25 parts by weight acrylic resin and over 25 parts by weight vinyl chloride polymer per 100 parts by weight of the blend.

**Patentansprüche**

1. Feuerbeständige Mischung mit guter Schlagfestigkeit und einer hohen Wärmedurchbiegungstemperatur enthaltend:
(1) 45 bis 65 Gewichtsprozent eines Interpolymeren, hergestellt durch das folgende Polymerisationsverfahren mit drei aufeinanderfolgenden Stufen:
   1. Emulsionspolymerisation einer Monomercharge "(Meth)-acrylat" aus wenigstens einem $C_2$—$C_{10}$ Alkylacrylat, $C_8$—$C_{22}$ Alkylmethacrylat oder verträglichen Mischungen derselben in einem wässrigen Polymerisationsmedium in Anwesenheit einer wirksamen Menge eines geeigneten di- oder polyäthylenisch ungesättigten Vernetzungsmittels für solch eine Monomeres,

2. Emulsionspolymerisation einer Monomercharge aus Styrol und Acrylnitril in einem wässrigen Polymerisationsmedium sowie in Anwesenheit einer wirksamen Menge eines geeigneten di- oder polyäthylenisch ungesättigten Vernetzungsmittels für solch ein Monomeres, wobei die Polymerisation in Anwesenheit des Produktes aus Stufe 1 durchgeführt wird, und

3. entweder Emulsions oder Suspensionspolymerisation einer Monomercharge aus Styrol und Acrylnitril in Abwesenheit eines Vernetzungsmittels, in Anwesenheit des Produktes aus Stufe 2 und enthaltend:

    a) 5 bis 50 Gewichtsprozent des vernetzten (Meth)-acrylats,

    b) 5 bis 35 Gewichtsprozent eines vernetzten Styrol-Acrylnitrils und

    c) 15 bis 90 Gewichtsprozent eines unvernetzten Styrol-Acrylnitrilbestandteils,

(2) 15 bis 30 Gewichtsprozent eines Acrylharzes und

(3) 20 bis 35 Gewichtsprozent eines Vinylchloridpolymeren.

2. Mischung nach Anspruch 1, die 45 bis 50 Gewichtsprozent des Interpolymeren, 30 bis 35 Gewichtsprozent des Vinylchloridpolymeren und 20 bis 25 Gewichtsprozent des Acrylharzes enthält.

3. Mischung nach Anspruch 1 oder 2, in der das Acrylharz Polymethylmethacrylat ist.

4. Mischung nach Anspruch 1 oder 3, die bis zu 25 Gewichtsteile Acrylharz und mehr als 25 Gewichtsteile Vinylchloridpolymer pro 100 Gewichtsteile der Mischung enthält.

**Revendications**

1. Mélange ignifugeant présentant une bonne résistance aux chocs et une température de fléchissement sous charge élevée comprenant:

(1) de 45 à 65 pourcent en poids d'un interpolymère préparé par le procédé de polymérisation continu comprenant les trois étapes suivantes:

1. polymérisation en émulsion d'une charge de monomère ("(meth)-acrylate" d'au moins un acrylate d'alkyle en $C_2$—$C_{10}$, un métacrylate d'alkyle en $C_8$—$C_{22}$, ou leurs mélanges compatibles, dans un milieu de polymérisation aqueux en présence d'une quantité efficace d'un agent de réticulation di- ou polyéthyléniquement insaturé approprié à ce monomère,

2. polymérisation en émulsion d'une charge de monomère de styrène et d'acrylonitrile dans un milieu de polymérisation aqueux, également en présence d'une quantité efficace d'un agent de réticulation diou polyéthylèniquement insaturé approprié à ce monomère, sachant que l'on met en oeuvre la polymérisation en présence du produit de l'étape 1, et,

3. polymérisation en émulsion ou en suspension d'une charge de monomère de styrène et d'acrylonitrile, en l'absence d'un agent de réticulation, en présence du produit résultant de l'étape 2, et, comprenant,

    a) de 5 à 50% en poids du (méth)-acrylate réticulé,

    b) de 5 à 35 % en poids d'un styrène-acrylonitrile réticulé et,

    c) de 15 à 90 pourcent en poids d'un constituant styrène-acrylonitrile non réticulé,

(2) de 15 à 30 pourcent en poids d'une résine acrylique et,

(3) de 20 à 35% en poids d'un polymère de chlorure de vinyle.

2. Mélange selon la revendication 1, comprenant de 45 % à 50 % en poids de l'interpolymère, de 30% à 35% en poids du polymère de chlorure de vinyl et de 20% à 25% en poids de la résine acrylique.

3. Mélange selon l'une quelconque des revendications 1 et 2, dans lequel la résine acrylique est le polyméthacrylate de méthyle.

4. Mélange selon l'une ou l'autre des revendications 1 à 3 contenant jusqu'à 25 parties en poids de résine acrylique et plus de 25 parties en poids de polymère de chlorure de vinyle pour 100 parties en poids du mélange.